# EUROPÄISCHE PATENTANMELDUNG

(11) **EP 4 275 561 A1**
(43) Veröffentlichungstag der Anmeldung: **15.11.2023**
(21) Anmeldenummer: 22172269.7
(22) Anmeldetag: 09.05.2022
(51) Int. Cl.: A47J 37/07

(54) **TRANSPORTABLER GASGRILL**

(71) Anmelder: Springlane GmbH, 40589 Düsseldorf (DE)
(72) Erfinder: Ruhfus, Max, 40589 Düsseldorf (DE)
(74) Vertreter: dompatent von Kreisler Selting Werner - Partnerschaft von Patent- und Rechtsanwälten mbB

(57) **Zusammenfassung**

Ein transportabler Gasgrill, umfassend mindestens eine Auflageeinrichtung zum Erhitzen von Speisen und/oder Grillgut, mindestens ein Gasbrenner und mindestens ein Gehäuse, wobei das Gehäuse von einer Transportkonfiguration in eine Gebrauchskonfiguration reversibel überführbar ist, wobei das Gehäuse in der Gebrauchskonfiguration zur Begrenzung eines Innenraums, zur Aufnahme des mindestens einen Gasbrenners und zur Lagerung der mindestens einen Auflageeinrichtung oberhalb des mindestens einen Gasbrenners ausgebildet ist, und wobei in der Gebrauchskonfiguration der mindestens eine Gasbrenner zwischen mindestens zwei einander gegenüberliegenden ersten und zweiten Seitenelementen des Gehäuses zur Stabilisierung des Gasgrills arretierbar ist.

## Beschreibung

Die vorliegende Erfindung betrifft einen transportablen Gasgrill.

Aus dem Stand der Technik sind bereits transportable Grills bzw. Grillvorrichtungen bekannt geworden. Im Rahmen der vorliegenden Erfindung werden Grills als transportabel verstanden, welche in einer sogenannten Transportkonfiguration ein geringes Volumen umschließen bzw. ein geringes Packmaß aufweisen und sich in der Transportkonfiguration insbesondere gut transportieren lassen. Die transportablen Grills sind insbesondere zur Einnahme der Transportkonfiguration zerlegbar bzw. zusammenfaltbar. In der Transportkonfiguration sind die transportablen Grilleinrichtungen üblicherweise nicht nutzbar, da sie in die Einzelelemente zerlegt oder zusammengefaltet vorliegen.

In der Gebrauchskonfiguration sind die Grills hingegen zusammengebaut bzw. aufgeklappt und zur Nutzung zum Grillen und/oder zum Erwärmen von Speisen bereit. In der Gebrauchskonfiguration begrenzt das Gehäuse der Grills einen Innenraum, wobei der Innenraum zur Aufnahme mindestens einer Wärmequelle, wie beispielsweise eines Gasbrenners, und weiterhin zur Lagerung einer Auflageeinrichtung, insbesondere in Form eines Grillrosts, oberhalb der mindestens einen Wärmequelle ausgebildet ist.

Transportable Grills können als Wärmequellen beispielsweise Kohlen, elektrische Wärmequellen oder auch Gasbrenner zur Hitzeerzeugung in dem Gehäuse umfassen.

Nachteilig an den aus dem Stand der Technik bekannten transportablen Grills ist es, dass diese entweder in der Transportkonfiguration aufgrund der starren Ausführung des Gehäuses ein zu großes Volumen umschließen und damit für einen flexiblen Transport ungeeignet sind. Alternativ sind auch zusammenfaltbare oder zusammensteckbare transportable Grills bekannt, wobei an den bekannten Grilleinrichtungen nachteilig ist, dass diese häufig sehr instabile/leicht verformbare Gehäuse umfassen, welche insbesondere dazu neigen, unter Hitzeeinwirkung der Grilleinrichtung sich zu verformen, instabil zu werden und gegebenenfalls teilweise sich Einzelteile lösen können.

Ausgehend von dem vorbezeichneten Stand der Technik ist es die Aufgabe der vorliegenden Erfindung, einen transportablen Gasgrill bereit zu stellen, welcher auf ein geringes Volumen und auf reduzierte Abmessungen in einer Transportkonfiguration gebracht werden kann, wobei jedoch in der Gebrauchskonfiguration eine Stabilität des transportablen Gasgrills nachhaltig gewährleistet werden kann.

Erfindungsgemäß gelöst wird die Aufgabe durch einen transportablen Gasgrill, welcher mindestens eine Auflageeinrichtung zum Erhitzen von Speisen und/oder Grillgut, mindestens einen Gasbrenner und mindestens ein Gehäuse umfasst. Das Gehäuse ist dabei derart ausgestaltet, dass dieses von einer Transportkonfiguration in eine Gebrauchskonfiguration reversibel überführbar ist. Im Sinne der reversiblen Überführbarkeit kann das Gehäuse beispielsweise von der Transportkonfiguration in die Gebrauchskonfiguration geklappt, geschwenkt, zerlegt und/oder gesteckt werden.

Das Gehäuse begrenzt in der Gebrauchskonfiguration einen Innenraum, der zur Aufnahme des mindestens einen Gasbrenners und zur Lagerung der mindestens einen Auflageeinrichtung oberhalb des mindestens einen Gasbrenners ausgebildet ist. In der Gebrauchskonfiguration ist der mindestens eine Gasbrenner zwischen mindestens zwei einander gegenüberliegenden ersten und zweiten Seitenelementen des Gehäuses zur Stabilisierung des Gasgrills arretierbar.

Im Rahmen der vorliegenden Erfindung können die mindestens zwei einander gegenüberliegenden ersten und zweiten Seitenelemente ebenso als einteiliges durchgehendes, insbesondere gebogenes, integrales Bauteil ausgebildet werden, welches beispielsweise sich entlang eines Kreisbogens oder einer ähnlichen Geometrie erstreckt. Auch das einteilige durchgehende Element kann dabei zwei einander gegenüberliegende erste und zweite Seitenelemente beispielsweise in Form von einander gegenüberliegenden ersten und zweiten Seitenflächen umfassen. Beispielsweise können die ersten und zweiten Seitenelemente durch einander gegenüberliegende Oberflächenanteile beispielsweise einer Kreiszylinderfläche gebildet werden.

Die Arretierung des Gasbrenners zwischen den mindestens zwei einander gegenüberliegenden ersten und zweiten Seitenelementen kann erfindungsgemäß werkzeuglos erfolgen.

Im Rahmen der vorliegenden Erfindung wird unter dem Begriff der Arretierung beispielsweise eine formschlüssige Verbindung zwischen den Elementen des Gasbrenners und der Seitenelemente verstanden, beispielsweise kann der Gasbrenner zwischen den ersten und zweiten einander gegenüberliegenden Seitenelementen verspannt werden, wobei insbesondere die Elastizität der Einzelelemente zur Verspannung und Arretierung des Gasbrenners mit den ersten und zweiten Seitenelementen genutzt wird.

In der Transportkonfiguration nimmt der transportable Gasgrill und insbesondere das Gehäuse des vorbezeichneten Grills ein geringes Volumen gegenüber der Gebrauchskonfiguration ein. Bevorzugt können die den transportablen Gasgrill bildenden Einzelelemente, insbesondere die ersten und zweiten Seitenelemente, in der Transportkonfiguration im Wesentlichen flach gelegt in parallel zueinander verlaufenden Ebenen beispielsweise parallel zu der Erstreckungsebene des mindestens einen Auflagerelementes angeordnet werden.

Bevorzugt weist der mindestens eine Gasbrenner einen zylindrischen Brennerkörper auf, welcher sich entlang einer Längsachse von einem ersten Ende zu einem zweiten Ende erstreckt, wobei der Brennerkörper eine Querschnittsfläche mit einem ersten Umfang aufweist und wobei im Bereich des zweiten Endes der Umfang der Querschnittsfläche auf einen zweiten Umfang reduziert ist. Unter der Querschnittsfläche des Brennerkörper wird dabei eine Schnittfläche des Brennerkörpers verstanden, welche sich im Wesentlichen orthogonal zu der Längsachse erstreckt.

Weiterhin kann erfindungsgemäß vorgesehen werden, dass das mindestens eine zweite Seitenelement mindestens eine Öffnung oder eine Tasche zur Aufnahme und bevorzugt zur Arretierung des zweiten Endes des Brennerkörpers umfasst.

Insbesondere kann es erfindungsgemäß vorgesehen werden, die Öffnung des zweiten Seitenelements größer als den zweiten Umfang des Gasbrenners und kleiner als den Umfang des Brennerkörpers auszuführen. Durch die vorbezeichnete Ausgestaltung wird es ermöglicht, das zweite Ende mit reduzierter Querschnittsfläche in die Öffnung des zweiten Seitenelementes einzuführen, wobei ein weiteres Durchführen des Brennerkörpers entlang der Brennerlängsachse durch die erweiterte Querschnittsfläche des Brennerkörpers über den Bereich des umfangsmäßig reduzierten zweiten Endes verhindert wird, womit der Brennerkörper im Bereich des zweiten Seitenelementes bis auf translative Bewegungen entlang der Längsachse in eine erste Richtung festgelegt werden kann.

Erfindungsgemäß kann es vorgesehen werden, dass der mindestens eine Gasbrenner durch eine Verdrehung um die Längsachse und/oder durch eine Verschwenkung von einer ersten Einführposition in eine zweite Verriegelungsposition reversibel überführbar ist, wobei der mindestens eine Gasbrenner in der Einführposition in den Bereich zwischen den gegenüberliegenden ersten und zweiten Seitenelementen eingebracht werden kann und in der zweiten Verriegelungsposition zwischen den gegenüberliegenden ersten und zweiten Seitenelementen arretiert bzw. bevorzugt verspannt ist.

Der Brennerkörper des mindestens einen Gasbrenners kann im Bereich des ersten Endes ein Rastelement umfassen und das erste Seitenelement kann mindestens eine an das Rastelement angepasste Rastposition zur Arretierung des Brennerkörpers mit dem ersten Seitenelement umfassen.

Bevorzugt kann erfindungsgemäß das Rastelement als Rastvorsprung und die mindestens eine Rastposition als an die Größe und Form des Rastelements angepasste Vertiefung oder Aussparung ausgeführt werden.

Das Rastelement kann erfindungsgemäß ebenso als mindestens zweistufige Rastnase ausgebildet werden, welche über den ersten Umfang des Brennerkörpers umfangsmäßig um eine erste und zweite Höhe hervorsteht und wobei das mindestens eine erste Seitenelement des Gehäuses eine an den ersten Umfang angepassten ersten Durchbruch zur Durchführung des Brennerkörpers umfasst, wobei der Durchbruch an mindestens einer Einführposition eine erste Aussparung mit der Abmessung der zweiten Höhe und an mindestens einer Verriegelungsposition eine zweite Aussparung mit der Abmessung der ersten Höhe umfasst. Der Durchbruch kann besonders bevorzugt als rundes Loch ausgebildet werden, wobei die ersten und zweiten Aussparungen als Materialausklinkungen entlang des Umfangs des Lochs ausgeführt werden. Erfindungsgemäß kann alternativ die Rastnase des Brenners durch Verspannung mit dem ersten Rastelement verspannt werden, in dieser Ausführungsform muss nicht zwingend eine Verriegelungsposition vorgesehen werden.

Die erste Höhe kann dabei geringer gewählt werden als die zweite Höhe.

Der Brennerkörper kann zumindest im Bereich des ersten und/oder zweiten Elementes eine runde Querschnittsfläche aufweisen. Besonders bevorzugt weist der gesamte Brennerkörper einen kreisrunden Querschnitt auf.

Das Gehäuse des transportablen Gasgrills kann weiterhin einen oberen Rahmen bzw. ein oberes Rahmenelement umfassen, wobei die mindestens zwei einander gegenüberliegenden Seitenelemente im Bereich deren oberen Enden schwenkbar an zwei einander gegenüberliegenden Seiten des Rahmens bzw. des Rahmenelementes befestigt sind.

Insbesondere kann ein Rahmen mit einer Rechteckform vorgesehen werden, wobei die ersten und zweiten einander gegenüberliegenden Seitenelemente entlang zweier gegenüberliegender Längs- bzw. Querseiten des rechteckigen Rahmenelementes schwenkbar angeordnet sind.

Die ersten und/oder zweiten Seitenelemente können zwei Vorsprünge an einander gegenüberliegenden Stirnflächen des jeweiligen Seitenelements umfassen und wobei der obere Rahmen den Vorsprüngen zugewandte Vertiefungen oder Aussparungen zur schwenkbaren Aufnahme der Seitenelemente an dem Rahmen umfasst.

Erfindungsgemäß kann vorgesehen werden, dass die Auflageeinrichtung gebildet wird durch mindestens ein Element ausgewählt aus der Gruppe von Grillrost, Grillplatte, Plancha, Spießhalter, Mangalaufsatz, Rotisserieaufsatz oder einer beliebigen Kombination der vorbezeichneten Elemente.

In der Gebrauchskonfiguration kann die mindestens eine Auflageeinrichtung bevorzugt an dem oberen Rahmen bzw. dem oberen Rahmenelement austauschbar gelagert werden. Insbesondere kann in dem Rahmenelement an der mindestens einen Auflageeinrichtung angepasste Aussparungen zum Einlegen der mindestens einen Auflageeinrichtung ausgebildet werden. Die mindestens eine Auflageeinrichtung wird damit in der Gebrauchskonfiguration oberhalb des mindestens einen Gasbrenners gelagert.

Zwischen dem mindestens einen Gasbrenner und der mindestens einen Auflageeinrichtung kann erfindungsgemäß auch jeweils ein Flame Tamer bzw. ein Hitzeverteiler angeordnet werden. Der mindestens eine Flame Tamer kann wiederum austauschbar in dem oberen Rahmenelement gelagert werden. Hierzu können an dem jeweiligen Flame Tamer Materialvorsprünge und in dem Rahmenelement an die Materialaussprünge angepasste Aussparungen vorgesehen werden, derart, dass die Vorsprünge der Flame Tamer in die Aussparungen zur Lagerung der Flame Tamer eingebracht werden können.

Erfindungsgemäß kann es vorgesehen werden, dass die vorbezeichneten Elemente, welche die Auflageeinrichtung bilden, aus Gusseisen, Edelstahl, Stein oder ähnlichen lebensmittel- und temperaturgeeigneten Materialien ausgebildet werden.

Es kann weiterhin vorgesehen werden, dass das Gehäuse zusätzlich ein unteres Rahmenelement zur Aufnahme beispielsweise einer Fettwanne umfasst, wobei das Rahmenelement bevorzugt an den gegenüberliegenden Seitenelementen des Gehäuses verschiebbar geführt ist.

Bevorzugt kann das untere Rahmenelement höhenverstellbar gegenüber zwei einander gegenüberliegenden Seitenelementen verschiebbar geführt werden. Zur verschieblichen bzw. verschiebbaren Führung des unteren Rahmenelements können mindestens zwei einander gegenüberliegende Seitenelemente jeweils mindestens einen Schlitz zur verschieblichen Lagerung des unteren Rahmenelements umfassen. Der Schlitz erstreckt sich dabei bevorzugt vertikal und damit orthogonal zum gedachten Verlauf eines oberen Rahmenelements bzw. auch des unteren aufzunehmenden Rahmenelementes. Insbesondere verläuft die schlitzförmige mindestens eine Aufnahme orthogonal zu einer Schwenkachse des jeweiligen Seitenelementes. Die vorbezeichnete Ausführungsform ermöglicht es, bei einem Ausklappen der gegenüberliegenden Seitenelemente aus einer Transportkonfiguration in eine Gebrauchskonfiguration, dass das untere Rahmenelement automatisch beispielsweise unter Ausnutzung der Wirkung der Gewichtskraft mit ausklappt.

Es kann vorgesehen werden, dass das Gehäuse zusätzlich mindestens zwei einander gegenüberliegende dritte und vierte Seitenelemente umfasst und wobei die ersten bis vierten Seitenelemente den Innenraum des Gehäuses an vier Seiten begrenzen.

Das Gehäuse und/oder bevorzugt die Auflageeinrichtung können eine rechteckige Querschnittsform umfassen.

Das Gehäuse kann erfindungsgemäß mindestens vier Seitenelemente umfassen, die jeweils durch flache einzelne Blechelemente gebildet sind, die jeweils im Bereich deren oberen Ende der jeweiligen Blechtafel schwenkbar mit einer Seite eines oberen rechteckigen Rahmenelementes verbunden sind.

Die unteren Endbereiche der ersten und zweiten Seitenelemente können zwischen dem unteren Rahmenelement und der Fettwanne festgelegt bzw. festgeklemmt werden.

Insbesondere kann es vorgesehen sein, dass ein erstes und zweites einander gegenüberliegendes Seitenelement als Blechtafel komplett glatt ausgestaltet wird und die dazu orthogonal angeordneten dritten und vierten Seitenelemente ebenfalls aus Blechtafeln ausgebildet sind, wobei dritte und vierte Seitenelemente im Bereich deren unteren Enden abgewinkelt zur Ausbildung von Aufstehelementen bzw. Füßen ausgebildet sind. Insbesondere können gummierte Elemente bzw. Gummifüße als Aufstehelemente vorgesehen werden.

Weiterhin kann es vorgesehen werden, dass der transportable Gasgrill zusätzlich einen Deckel umfasst, welcher besonders bevorzugt schwenkbar an dem oberen Rahmen bzw. dem oberen Rahmenelement befestigbar ist. Der Deckel kann zur Aufnahme der Elemente des Grills, insbesondere der Seitenelemente, der Gasbrenner und sonstiger Gegenstände des Gasgrills in einer Transportkonfiguration verwendet werden.

Der Rahmen kann derart ausgestaltet werden, dass der Deckel beidseitig verriegelbar am Rahmen über Löcher und im Deckel vorgesehene angepasste Rundstifte angeordnet werden kann.

Es kann vorgesehen werden, dass die Fettwanne zwischen dem unteren Rahmenelement und jeweils zweier gegenüberliegender Seitenelemente verriegelbar ist.

Die Fettwanne und/oder mindestens ein Seitenelement und/oder die mindestens eine Auflageeinrichtung und/oder die mindestens eine Planche und/oder der mindestens eine Flame Tamer kann aus einer Blechtafel gebildet werden. Insbesondere kann es erfindungsgemäß vorgesehen werden, die den transportablen Gasgrill bildenden Einzelelemente aus jeweils tafelförmigem Blechmaterial, bis auf den Brenner und etwaig vorgesehene Gummifüße, auszugestalten. Als Blechmaterial wird im Rahmen der Erfindung eben auch Material abgewickelt von einem Coil verstanden.

Gemäß einem alternativen zweiten Aspekt betrifft die Erfindung einen Gasgrill, welcher mindestens eine Auflageeinrichtung zum Erhitzen von Speisen und/oder Grillgut, mindestens einen Gasbrenner und mindestens ein Gehäuse umfasst. Das Gehäuse ist dabei derart ausgestaltet, dass dieses einen Innenraum aufweist, der zur dauerhaften Aufnahme des mindestens einen Gasbrenners und zur Lagerung der mindestens einen Auflageeinrichtung oberhalb des mindestens einen Gasbrenners ausgebildet ist. Der mindestens eine Gasbrenner ist zwischen mindestens zwei einander gegenüberliegenden ersten und zweiten Seitenelementen des Gehäuses zur Stabilisierung des Gasgrills arretierbar ausgestaltet. In der alternativen zweiten Ausführungsform ist das Gehäuse nicht mehr reversibel von einer Gebrauchs- in eine Transportkonfiguration überführbar, sondern weist unveränderlich die Gebrauchskonfiguration auf. Der Gasgrill gemäß dem zweiten alternativen Aspekt der Erfindung lässt sich selbstverständlich mit den vorbezeichneten optionalen bzw. bevorzugten Ausführungsformen, insbesondere gemäß der abhängigen Ansprüche, kombinieren.

Nachfolgend wird unter Bezugnahme auf die beigefügten Figuren eine beispielhafte Ausführungsform eines erfindungsgemäßen transportablen Gasgrills ausgeführt.

Es zeigen:
- Figur 1A: eine schematische perspektivische Ansicht einer ersten bei-spielhaften Ausführungsform eines erfindungsgemäßen trans-portablen Gasgrills in der Gebrauchskonfiguration;
- Figur 1B: eine Explosionsdarstellung des erfindungsgemäßen Gasgrills gemäß Figur 1A;
- Figur 2: eine schematische perspektivische Ansicht einer zweiten er-findungsgemäßen Ausführungsform eines Gasgrills in der Transportkonfiguration;
- Figur 3: eine Ansicht der beispielhaften ersten Ausführungsform des Gasgrills gemäß Fign. 1A und 1B in der Transportkonfigurati-on; sowie
- Figur 4: eine perspektivische Ansicht eines erfindungsgemäßen Gasbrenners in einer beispielhaften Ausführungsform.

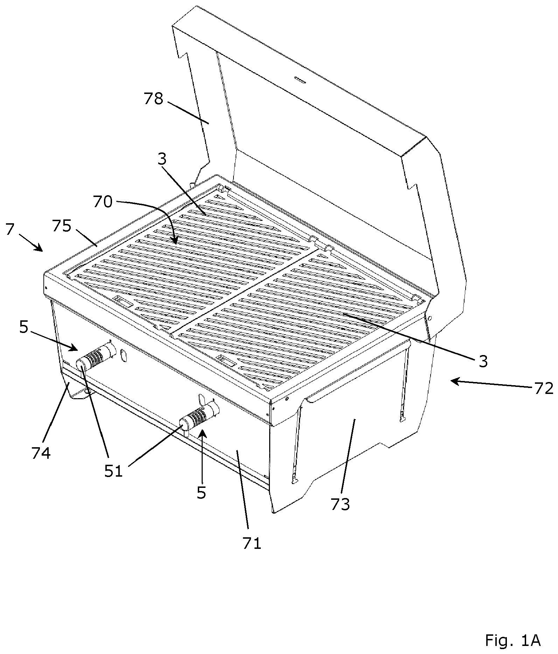

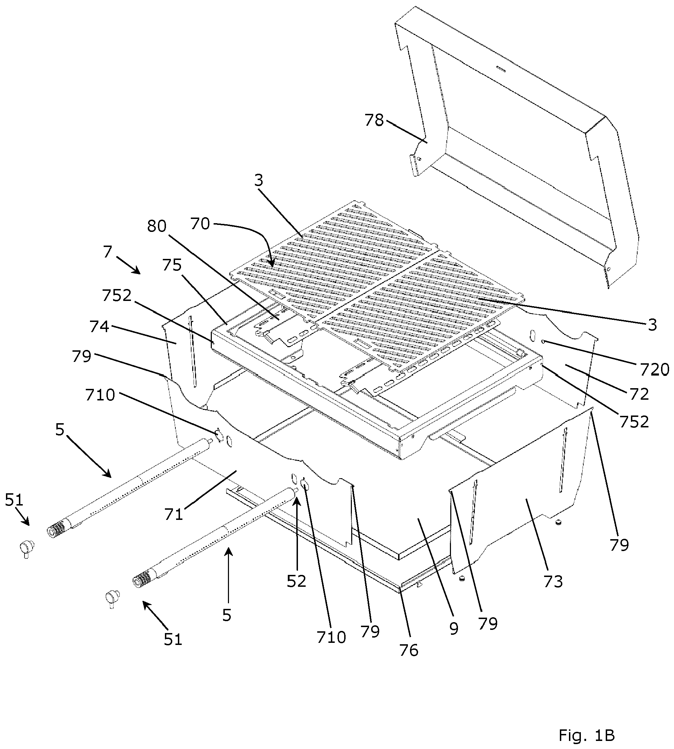

Die Figuren 1A und 1B zeigen eine erste beispielhafte Ausführungsform eines erfindungsgemäßen transportablen Gasgrills.

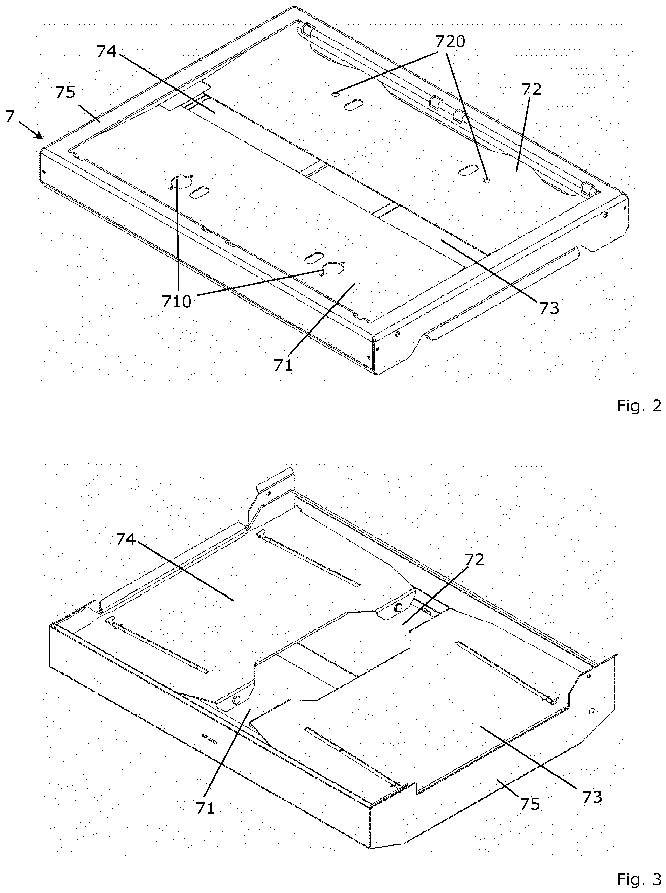

Der transportable Gasgrill ist in der Figur 1A in der Gebrauchskonfiguration dargestellt. Der Gasgrill umfasst zwei Auflageeinrichtungen 3, welche in der dargestellten Ausführungsform als Grillroste dargestellt sind, welche zum Erhitzen von Speisen und/oder insbesondere zum Grillen von Grillgut ausgestaltet sind. Die beiden dargestellten Grillroste können beispielsweise aus einer Blechtafel durch Stanzen oder Schneiden hergestellt werden. Alternativ können die Auflageeinrichtungen 3, wie insbesondere das Grillrost, auch als Gussteil ausgestaltet werden. Weiterhin umfasst die beispielhafte Ausführungsform des Gasgrills zwei Gasbrenner 5 und ein Gehäuse 7. Das gezeigte Gehäuse 7 ist von der dargestellten Gebrauchskonfiguration durch Umklappen der Seitenelemente 71, 72, 73, 74 gegenüber dem Rahmenelement 75 in die in der Figur 3 dargestellte Transportkonfiguration reversibel überführbar. Das Gehäuse 7 ist in der gemäß Figur 1 dargestellten Gebrauchskonfiguration zur Begrenzung eines Innenraumes 70 sowie zur Aufnahme der dargestellten zwei Gasbrenner 5 sowie zur Lagerung der Auflageeinrichtungen 3 oberhalb der beiden Gasbrenner 5 ausgebildet. In der dargestellten Gebrauchskonfiguration sind die beiden Gasbrenner 5 zwischen den zwei einander gegenüberliegenden ersten und zweiten Seitenelementen 71, 72 des Gehäuses 7 zur Stabilisierung des Gasgrills angeordnet.

Das dargestellte Gehäuse 7 weist einen oberen Rahmen 75 auf, wobei die dargestellten, einander gegenüberliegenden, ersten und zweiten Seitenelemente 71 sowie 72 als auch die zusätzlichen dritten und vierten Seitenelemente 73, 74 jeweils in deren oberen Endbereichen schwenkbar an den beiden gegenüberliegenden Seiten des Rahmens 75 befestigt bzw. angeordnet sind.

Der Figur 1B ist entnehmbar, dass die Seitenelemente 71 - 74 zur schwenkbaren Befestigung an dem Rahmenelement 75 zwei Materialvorsprünge 79 an einander gegenüberliegenden Stirnflächen des jeweiligen Seitenelements 71 - 74 umfassen, wobei der obere Rahmen 75 den Materialvorsprüngen 79 zugewandte Vertiefungen bzw., wie in Figur 1B dargestellt, Löcher 752 zur Aufnahme der Vorsprünge 79 der Seitenelemente 71 - 74 aufweist. Die beispielhafte Ausgestaltungsform weist dabei den Vorteil auf, dass die Elastizität des tafelförmigen Seitenelementes genutzt werden kann, um dieses während des Einführens in die Aufnahmen 751 des Rahmenelementes 75 temporär/elastisch derart zu verformen, dass das entsprechende Seitenelement 71 - 74 in die entsprechenden Aufnahmen 752 des Rahmenelements 75 eingebracht werden kann. Nach dem Einbringen federt dann das entsprechende Seitenelement 71 - 74 elastisch wieder in die Ausgangsform zurück und es ist eine schwenkbare Befestigung des jeweiligen Seitenelements 71 - 74 an den Rahmenelement 75 ermöglicht.

In den Figuren 1A und 1B sind die beiden Auflageeinrichtungen 3 als Rost ausgeführt, es kann jedoch auch erfindungsgemäß vorgesehen werden, alternativ zu den dargestellten Grillrosten Platten, Planchas, Spießhalter, Mangal- oder Rotisserie-Aufsätze zu nutzen und insbesondere über das Rahmenelement 75 zu lagern. Selbstverständlich können auch unterschiedliche Auflageeinrichtungen 3, wie beispielsweise ein flächenmäßig anteiliges Grillrost in Kombination mit einer Grillplatte, genutzt werden. Wie dies aus den Figuren 1A sowie 1B entnehmbar ist, kann es dazu erfindungsgemäß vorgesehen werden, im Bereich der Auflageeinrichtung 3 an gegenüberliegenden Stirnseiten der jeweiligen Auflageeinrichtung 3 Materialvorsprünge bzw. Nasen vorzusehen, welche in entsprechende Aussparungen des Rahmenelements 75 einlegbar bzw. einbringbar sind zur austauschbaren Lagerung des jeweiligen Auflageelementes 3 über das Rahmenelement 75.

Wie dies bereits im Hinblick auf die Figur 1A beschrieben wurde, kann es erfindungsgemäß vorgesehen werden, dass das Gehäuse 7 zusätzlich zu den mindestens zwei ersten und zweiten Seitenelementen 71, 72 weiterhin mindestens zwei einander gegenüberliegende dritte und vierte Seitenelemente 73, 74 umfasst und wobei es ebenfalls vorgesehen ist, dass die ersten bis vierten Seitenelemente 71 - 74 den Innenraum 70 des Gehäuses 7 an vier Seiten bzw. an zumindest zu vier Seitenflächen begrenzen.

Erfindungsgemäß kann es vorgesehen werden, wie dies in Figur 1B erkennbar ist, zusätzlich ein unteres Rahmenelement 76 vorzusehen, über welches wiederum eine Fettwanne 9 aufgenommen und gelagert werden kann. Bevorzugt kann das untere Rahmenelement 76 an mindestens zwei einander gegenüberliegenden Seitenelementen 71 - 74 verschieblich geführt werden und damit befestigt werden kann.

Das Gehäuse 7 und/oder bevorzugt die Auflageeinrichtung 3 können erfindungsgemäß, wie in den Figuren dargestellt, im Wesentlichen eine rechteckige Querschnittsform aufweisen, wobei insbesondere das Gehäuse 7 an den vier Seitenflächen durch jeweilige Seitenelemente 71 - 74 und damit bevorzugt durch vier Seitenelemente begrenzt wird. Dazu kann es vorgesehen werden, dass das Gehäuse 7, wie in den Figuren dargestellt, vier jeweils tafelförmig ausgebildete Seitenelemente 71 - 74 umfasst, die jeweils im Bereich eines oberen Endes der jeweiligen Blechtafel schwenkbar mit einer Seite des rechteckigen Rahmenelementes 75 verbunden sind.

Es kann weiterhin erfindungsgemäß vorgesehen werden, dass zumindest zwei einander gegenüberliegende Seitenelemente 71 - 74 im Bereich deren unterer Enden zur Ausbildung von Aufstehelementen bzw. Füssen abgekantet oder partiell winklig umgebogen werden.

Zur Verbesserung der Rutschfestigkeit können auch im Bereich der unteren Enden bzw. insbesondere im Bereich der Aufstehelemente weiterhin gummierte Füsse vorgesehen werden.

Insbesondere kann es vorgesehen werden, dass die Fettwanne 9 und/oder mindestens ein Seitenelement 71 - 74 und/oder die Auflageeinrichtung 3 aus einer Blechtafel ausgebildet werden.

Wie in Figur 1B dargestellt, können zwischen den Gasbrennern 5 sowie den Auflageeinrichtungen 3 sogenannte Flame Tamer 80 vorgesehen werden, welche auch als Wärmeverteiler bezeichnet werden können. Die Flame Tamer 80 können dabei ebenso über das Rahmenelement 75 aufgenommen und gelagert werden.

Erfindungsgemäß kann es vorgesehen werden, wie in den Figuren 1A sowie 1B und in der Figur 3 gezeigt, dass der Gasgrill weiterhin einen Deckel 78 umfasst, wobei der Deckel 78 bevorzugt über Materialvorsprünge bzw. über vorstehende stiftförmige Elemente schwenkbar an dem Rahmenelement befestigbar ist. Hierzu kann es vorgesehen werden, im Bereich des oberen Rahmenelementes Löcher bzw. Materialaussparungen zur Aufnahme der vorbezeichneten Materiavorsprünge des Deckels 78 vorzusehen. Insbesondere kann es dabei auch vorgesehen werden, mehrere Rundlöcher an unterschiedlichen Seiten des Rahmenelementes 75 auszuführen, derart, dass der Deckel 78 eben an verschiedenen Seiten des Rahmenelementes 75 schwenkbar befestigbar ist. Folglich kann die Schwenkachse des Deckels 78 entweder vorne oder hinten an dem Rahmenelement angeordnet werden.

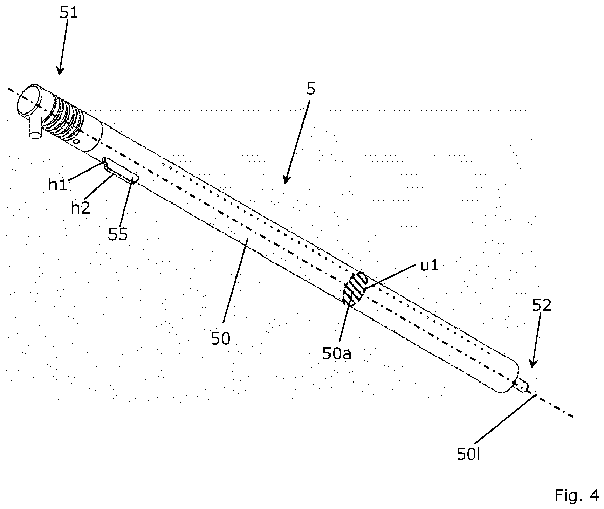

Die Fig. 4 zeigt einen Gasbrenner 5 mit einem zylindrischen Brennerkörper 50, wobei sich der Brennerkörper 50 entlang einer Längsachse 50I von einem ersten Ende 51 zu einem gegenüberliegenden zweiten Ende 52 erstreckt und wobei der Brennerkörper 50 eine Querschnittsfläche 50a mit einem ersten Umfang u1 aufweist, wobei im Bereich des zweiten Endes 52 der Umfang der Querschnittsfläche 50a auf einen zweiten Umfang u2 reduziert ausgeführt ist. Das zweite Seitenelement 72 kann mindestens eine Öffnung 720 oder alternativ eben auch eine Tasche zur Aufnahme und Arretierung des zweiten Endes 52 des Brennerkörpers 50 umfassen.

Der Brennerkörper 50 des Gasbrenners 5 weist im Bereich des ersten Endes 51 ein Rastelement 55 auf, wobei das erste Seitenelement 71 mindestens eine an das Rastelement 55 angepasste Rastposition 710 zur Arretierung des Brennerkörpers 50 mit dem ersten Seitenelement 71 umfasst.

Das Rastelement 55 ist in der beispielhaften Ausführungsform der Figur 4 als zweistufige Rastnase ausgebildet, welche über den ersten Umfang u1 des Brennerkörpers 50 umfangmäßig um eine erste und zweite Höhe h1, h2 hervorsteht und wobei das erste Seitenelement 71 einen an den ersten Umfang u1 angepassten Durchbruch 710 zur Durchführung des Brennerkörpers 50 umfasst, wobei der Durchbruch 710 an mindestens einer Einführposition eine erste Aussparung 711 mit der Abmessung der zweiten Höhe h2 und an mindestens einer Verriegelungsposition eine zweite Aussparung 720 mit der Abmessung der ersten Höhe h1 umfasst.

## Patentansprüche

1. Transportabler Gasgrill, umfassend:
- mindestens eine Auflageeinrichtung (3) zum Erhitzen von Speisen und/oder Grillgut;
- mindestens ein Gasbrenner (5); und
- mindestens ein Gehäuse (7),
wobei das Gehäuse (7) von einer Transportkonfiguration in eine Gebrauchskonfiguration reversibel überführbar ist;
wobei das Gehäuse (7) in der Gebrauchskonfiguration zur Begrenzung eines Innenraums (70), zur Aufnahme des mindestens einen Gasbrenners (5) und zur Lagerung der mindestens einen Auflageeinrichtung (3) oberhalb des mindestens einen Gasbrenners (5) ausgebildet ist, und
wobei in der Gebrauchskonfiguration der mindestens eine Gasbrenner (5) zwischen mindestens zwei einander gegenüberliegenden ersten und zweiten Seitenelementen (71, 72) des Gehäuses (7) zur Stabilisierung des Gasgrills arretierbar ist.

2. Transportabler Gasgrill nach Anspruch 1, wobei der mindestens eine Gasbrenner (5) einen zylindrischen Brennerkörper (50) umfasst, welcher sich entlang einer Längsachse (50I) von einem ersten Ende (51) zu einem zweiten Ende (52) erstreckt, wobei der Brennerkörper (50) eine Querschnittsfläche (50a) mit einem ersten Umfang (u1) aufweist und wobei im Bereich des zweiten Endes (52) der Umfang der Querschnittsfläche (50a) auf einen zweiten Umfang (u2) reduziert ist.

3. Transportabler Gasgrill nach einem der vorausgehenden Ansprüche, wobei das zweite Seitenelement (72) mindestens eine Öffnung (720) oder eine Tasche zur Aufnahme und Arretierung des zweiten Endes (52) des Brennerkörpers (50) umfasst.

4. Transportabler Gasgrill nach einem der vorausgehenden Ansprüche, wobei der mindestens eine Gasbrenner (5) durch eine Verdrehung um die Längsachse (50I) und/oder durch eine Verschwenkung von einer ersten Einführposition in eine zweite Verriegelungsposition reversibel überführbar ist, wobei der mindestens eine Gasbrenner (5) in der Einführposition in den Bereich zwischen gegenüberliegenden ersten und zweiten Seitenelementen (71,72) eingebracht werden kann und in der zweiten Verrieglungsposition zwischen den gegenüberliegenden ersten und zweiten Seitenelementen (71,72) arretiert ist.

5. Transportabler Gasgrill nach einem der vorausgehenden Ansprüche, wobei der Brennerkörper (50) des mindestens einen Gasbrenners (5) im Bereich des ersten Endes (51) ein Rastelement (55) umfasst und wobei das erste Seitenelement (71) mindestens eine an das Rastelement (55) angepasste Rastposition (710) zur Arretierung des Brennerkörpers (50) mit dem ersten Seitenelement (71) umfasst.

6. Transportabler Gasgrill nach Anspruch 5, wobei das Rastelement (55) als mindestens zweistufige Rastnase ausgebildet ist, welche über den ersten Umfang (u1) des Brennerkörpers (50) umfangmäßig um eine erste und zweite Höhe (h1, h2) hervorsteht und wobei das erste Seitenelement (71) einen an den ersten Umfang (u1) angepassten Durchbruch (710) zur Durchführung des Brennerkörpers (50) umfasst, wobei der Durchbruch (710) an mindestens einer Einführposition eine erste Aussparung (711) mit der Abmessung der zweiten Höhe (h2) und an mindestens einer Verriegelungsposition eine zweite Aussparung (720) mit der Abmessung der ersten Höhe (h1) umfasst.

7. Transportabler Gasgrill nach einem der vorausgehenden Ansprüche, wobei der Brennerkörper (50) zumindest im Bereich des ersten und/oder zweiten Endes (51, 52) eine runde Querschnittsfläche (50a) aufweist.

8. Transportabler Gasgrill nach einem der vorausgehenden Ansprüche, wobei das Gehäuse (7) weiterhin einen oberen Rahmen (75) umfasst, wobei die mindestens zwei einander gegenüberliegenden Seitenelemente (71,72) im Bereich der oberen Enden schwenkbar an zwei gegenüberliegenden Seiten des Rahmens (75) befestigbar sind.

9. Transportabler Gasgrill nach Anspruch 8, wobei die Seitenelemente (71, 72) zwei Vorsprünge (712, 722) an einander gegenüberliegenden Stirnflächen des Seitenelements (71, 72) umfassen und wobei der obere Rahmen (75) den Vorsprüngen (712, 722) zugewandte Vertiefungen oder Aussparungen (750) zur schwenkbaren Aufnahme der Seitenelemente (71, 72) umfasst.

10. Transportabler Gasgrill nach einem der vorausgehenden Ansprüche, wobei die Auflageeinrichtung (3) gebildet wird durch mindestens ein Element ausgewählt aus der Gruppe von: Rost, Platte, Plancha, Spießhalter, Mangal-Aufsatz, Rotisserie-Aufsatz oder durch eine beliebige Kombination von Elementen ausgewählt aus der vorbezeichneten Gruppe.

11. Transportabler Gasgrill nach einem der vorausgehenden Ansprüche, wobei das Gehäuse (7) zusätzlich mindestens zwei einander gegenüberliegende dritte und vierte Seitenelemente (73, 74) umfasst, und wobei die ersten bis vierten Seitenelemente (71, 72, 73, 74) den Innenraum (70) des Gehäuses (7) an vier Seiten begrenzen.

12. Transportabler Gasgrill nach einem der vorausgehenden Ansprüche, wobei das Gehäuse (7) weiterhin ein unteres Rahmenelement (76) zur Aufnahme einer Fettwanne (9) umfasst, welches bevorzugt an mindestens zwei einander gegenüberliegenden Seitenelementen (71, 72, 73, 74) verschieblich geführt ist.

13. Transportabler Gasgrill nach einem der vorausgehenden Ansprüche, wobei das Gehäuse (7) und/oder bevorzugt die Auflageeinrichtung (3) eine rechteckige Querschnittsform aufweist.

14. Transportabler Gasgrill nach einem der vorausgehenden Ansprüche, wobei das Gehäuse (7) vier Seitenelemente (71, 72, 73, 74) umfasst, die jeweils durch flache einzelne Blechtafeln gebildet sind, die jeweils im Bereich eines oberen Endes der jeweiligen Blechtafel schwenkbar mit einer Seite eines rechteckigen oberen Rahmenelementes (75) verbunden sind.

15. Transportabler Gasgrill nach einem der vorausgehenden Ansprüche, wobei das Gehäuse (7) weiterhin einen Deckel (78) umfasst.

16. Transportabler Gasgrill nach einem der vorausgehenden Ansprüche, wobei die Fettwanne (9) und/ oder mindestens ein Seitenelement (71, 72, 73, 74) und/oder die Auflageeinrichtung (3) aus einer Blechtafel ausgebildet sind.
